# EUROPEAN PATENT SPECIFICATION

(11) **EP 4 510 026 B1**
(45) Date of publication and mention of the grant of the patent: **30.09.2026**
(21) Application number: 23795191.8
(22) Date of filing: 20.04.2023
(51) Int. Cl.: G06F 21/57, G06F 21/60, G06F 21/74, H04L 9/40, G06F 21/53

(54) **DATA PROCESSING METHOD AND APPARATUS**
DATENVERARBEITUNGSVERFAHREN UND -VORRICHTUNG
PROCÉDÉ ET APPAREIL DE TRAITEMENT DE DONNÉES

(30) Priority: 29.04.2022 CN 202210467415
(43) Date of publication of application: 19.02.2025
(73) Proprietor: Huawei Technologies Co., Ltd., Shenzhen, Guangdong 518129 (CN)
(72) Inventor: HAN, Zefeng, Shenzhen, Guangdong 518129 (CN); FU, Gengsheng, Shenzhen, Guangdong 518129 (CN); DU, Xiaoqiang, Shenzhen, Guangdong 518129 (CN)
(74) Representative: Epping - Hermann - Fischer
(86) International application number: PCT/CN2023/089573
(87) International publication number: WO 2023/207758

(56) References cited:
- CN-A- 114 238 900
- CN-A- 114 245 375
- US-A1- 2020 304 319
- US-A1- 2021 034 763
- US-A1- 2022 103 349

## Description

### TECHNICAL FIELD

Embodiments of this application relate to the field of terminal technologies, and in particular, to a data processing method, a data processing apparatus, a computer-readable storage medium, and a computer program product.

### BACKGROUND

A secure environment, for example, a trusted execution environment (trusted execution environment, TEE) or a confidential computing environment, is generally set in an electronic device (for example, a mobile phone or a tablet computer) or a server. The electronic device or the server provides a secure-state service (for example, secure storage, a security key, secure encryption and decryption, and a secure driver) in the secure environment, and protects data security during running of the secure-state service.

However, data in the secure environment can be processed only in the secure environment, and cannot be communicated, to ensure data security. Therefore, the secure-state service that can be provided by the electronic device or the server depends on a security capability in the secure environment of the electronic device or the server. If the electronic device or the server does not have a security capability of processing services corresponding to some secure-state services, the secure-state services cannot be provided, and consequently, user experience is affected.

US 2020/0304319 A1 discloses methods, systems, and apparatus, for securely executing smart contract operations in a trusted execution environment (TEE). One of the methods includes establishing, by a key management (KM) TEE of a KM node, a trust relationship with a plurality of KM TEEs in a plurality of KM nodes based on performing mutual attestations with the plurality of KM TEEs; initiating a consensus process with the plurality of KM TEEs for reaching consensus on providing one or more encryption keys to a service TEE of the KM node; in response to reaching the consensus with the plurality of KM TEEs, initiating a local attestation process with a service TEE in the KM node; determining that the local attestation process is successful; and in response to determining that the local attestation process is successful, providing one or more encryption keys to the TEE executing on the computing device.

CN 114238900 A discloses a data transmission method and electronic equipment. The method comprises the steps that first electronic equipment establishes connection with second electronic equipment; the second electronic equipment sends a request to the first electronic equipment, the request comprises biological characteristics input by a user, then the first electronic equipment authenticates the biological characteristics input by the user by using the target biological characteristic template, and when the authentication is passed, sensitive data associated with the biological characteristic template is determined; and finally, the first electronic equipment transmits the sensitive data to the second electronic equipment.

### SUMMARY

The invention is set out by the appended claims. Advantageous embodiments are defined in the dependent claims.

To resolve the foregoing technical problem, embodiments of this application provide a data processing method, a data processing apparatus, a computer-readable storage medium, and a computer program product. According to the technical solutions provided in embodiments of this application, connections between secure environments of different devices are established, so that the different devices can borrow a security capability of another device through the connections, improving a processing capability in the secure environments of the devices, and further improving user experience. In the following, parts of the description and drawings referring to embodiments which are not covered by the claims are not presented as embodiments of the invention, but as examples useful for understanding the invention.

To achieve the foregoing technical objective, embodiments of this application provide the following technical solutions.

According to a first aspect, a data processing method according to independent claim 1 is provided. In some embodiments, secure connections between secure environments of different devices are established to pool a security capability, and secure environments of all devices in a communication system are integrated into a super secure environment. Therefore, provided that the super secure environment has a security capability of processing to-be-processed data, the device in the communication system can process the to-be-processed data.

In this way, security capabilities and security resources of different devices are shared through interaction between the secure environments of the different devices. In addition, on the basis of ensuring data security, a REE does not need to be adapted in advance (in other words, an application capability on a REE side does not need to be customized). A security capability of another device can be adaptively invoked without being perceived by a user, to meet a requirement of the user and reduce operation difficulty of the user.

According to the first aspect, the determining a target second secure environment that is in the one or more second secure environments and that includes a first security capability includes: obtaining first security capability information, where the first security capability information includes a security capability included in the one or more second secure environments; and determining the target second secure environment based on the first security capability information.

According to this disclosure, after determining the to-be-processed first data in the first secure environment, the first device determines that a security capability in the first secure environment of the first device is insufficient to process the first data. Therefore, the first device needs to invoke a security capability in a second secure environment of another second device to process the first data or assist in processing the first data. In view of this, the first device needs to obtain a security capability (that is, a security capability is determined by obtaining security capability information) in the second secure environment of each second device, to determine required second security capabilities of some or all of the second devices.

In this way, the first device may determine the target second secure environment in which the first security capability used to process the first data is configured, and send the first data to the target second secure device including the target second secure environment for processing. This meets a data processing requirement in a secure environment, and improves user experience.

According to any one of the first aspect or the implementations of the first aspect, before the sending the to-be-processed first data in the first secure environment to the target second secure environment that is in the one or more second secure environments and that includes the first security capability through a second connection, the method further includes: agreeing on a first key for data transmission between the first secure environment and the target second secure environment with target second device including the target second secure environment, where the first key is used to encrypt the first data and the first processing result that are transmitted through the second connection.

In some scenarios, after determining that the first security capability in the target second secure environment of the target second device needs to be used, the first device may agree on a first key for data transmission with the target second device, to ensure security of data transmission between secure environments.

In this way, after data is encrypted and transmitted through the agreed key, communication security in the secure environment is effectively ensured.

According to any one of the first aspect or the implementations of the first aspect, the method further includes: deleting the first key.

According to any one of the first aspect or the implementations of the first aspect, the method further includes: determining that the target second secure environment includes a second security capability, where the second security capability is used to process to-be-processed second data in the first secure environment; and agreeing on a second key for data transmission between the first secure environment and the target second secure environment with the target second device, where the second key is used to encrypt the second data and a second processing result corresponding to the second data that are transmitted through the second connection.

In this way, each time the first device needs to invoke a security capability of another device, the first device needs to reagree on a key for current communication with the determined target second device. After the communication ends, the key for the communication is deleted. This avoids key leakage that affects data transmission security.

According to any one of the first aspect or the implementations of the first aspect, before the obtaining first security capability information, the method further includes: receiving, through the first connection, first information that is of the one or more second secure environments and that is sent by the one or more second devices; determining, based on the first information, that the one or more second secure environments are secure; and separately establishing one or more secure connections between the first secure environment and the one or more second secure environments, where the secure connection is used to obtain the first security capability information of the one or more second devices, and the second connection is a connection that corresponds to the target second secure environment and that is in the one or more secure connections.

In some embodiments, the first device and the second device determine, by exchanging device certificates, that the first secure environment and the second secure environment are secure, then, may establish a secure connection between secure environments, and may invoke a security capability of another device subsequently through the secure connection, to implement security capability sharing in a distributed scenario.

In this way, security of interaction in secure environments of the first device and the second device can be further ensured.

According to any one of the first aspect or the implementations of the first aspect, the method further includes: sending, through the secure connection, second security capability information that is of a security capability included in the first secure environment and that is sent to the one or more second devices.

In some embodiments, the first device sends, to the one or more second devices through the first connection, security capability information including the security capability in the first secure environment.

In this way, sharing of security capability information in a communication system is implemented, so that the one or more second devices subsequently invoke the security capability of the first device.

According to any one of the first aspect or the implementations of the first aspect, the obtaining security capability information includes: obtaining the first security capability information that is locally stored; and/or obtaining the first security capability information sent by a central node.

In some embodiments, the security capability information that is locally stored or security capability information stored on the central node includes second security capability information corresponding to the first device and first security capability information corresponding to the one or more second devices.

According to any one of the first aspect or the implementations of the first aspect, the method further includes: sending second security capability information of a security capability included in the first secure environment to the central node.

In this way, the first device and the one or more second devices that are in the communication system may share security capability information in a plurality of manners, so that the devices subsequently share a security capability.

According to any one of the first aspect or the implementations of the first aspect, the method further includes: disconnecting the first connection to the target second device including the target second secure environment; and deleting security capability information that is about the target second secure environment of the target second device and that is in the first security capability information.

In this way, it is ensured that the security capability information in the communication system is synchronously updated, to avoid a case in which, as the synchronized security capability information includes security capability information of a device that does not access the communication system, another device fails to invoke a security capability of the device. According to any one of the first aspect or the implementations of the first aspect, the security capability included in the one or more second secure environments includes a security capability of a secure-state application running in the one or more second secure environments, and/or a secure-state service supported by the one or more second secure environments.

According to any one of the first aspect or the implementations of the first aspect, the first secure environment or the second secure environment is a trusted execution environment TEE or a confidential computing environment.

According to any one of the first aspect or the implementations of the first aspect, before the obtaining first security capability information, the method further includes: detecting a first operation of a user; determining to-be-processed data of a first service corresponding to the first operation; determining first data based on the to-be-processed data of the first service; or obtaining a second service; and determining first data in to-be-processed data of the second service.

Optionally, the first device is an electronic device or a server.

In some embodiments, the first security capability may be a complete security capability of a secure-state application in the target second secure environment of the target second device, or may be a part of a capability (for example, a secure-state service) of a secure-state application.

In this way, a security capability of each device is abstracted, to divide a security service. A plurality of devices cooperate to process a security service by using security capabilities of the devices, so that the security capability of each device is fully utilized.

According to a second aspect, as an example for a better understanding, a data processing method is provided, applied to a second device, where the second device establishes a first connection to a first device, the second device includes a second secure environment, and the first device includes a first secure environment. The method includes: receiving, by the second secure environment of the second device through a second connection, first data sent by the first secure environment of the first device, where the second connection is a connection between the first secure environment and the second secure environment, and the first data is to-be-processed data in the first secure environment; processing the first data by using a first security capability, to obtain a first processing result; and sending the first processing result to the first secure environment through the second connection.

According to the second aspect, before the receiving, by the second secure environment of the second device through a second connection, first data sent by the first secure environment of the first device, the method further includes: agreeing on a first key for data transmission between the first secure environment and the second secure environment with the first device, where the first key is used to encrypt the first data and the first processing result.

According to any one of the second aspect or the implementations of the second aspect, before the processing the first data by using a first security capability, the method further includes: determining that the first device has a permission to invoke the first security capability.

In some embodiments, a permission determining module may be further configured in a target second secure environment of a target second device, and is configured to determine whether the first device has a permission to invoke the first security capability. For example, a service label carried in the first data sent by the first device may further include a device identifier of the first device, and the target second device may determine a permission of the first device based on the device identifier. After determining the permission to invoke the first security capability, the target second device processes the obtained first data by using the first security capability.

In this way, a device without a permission is prevented from invoking a security capability in a secure environment of the device, to further ensure security of the secure environment of the device. According to any one of the second aspect or the implementations of the second aspect, the first data carries a service label corresponding to the first data, and before the processing the first data by using a first security capability, to obtain a first processing result, the method further includes: determining, based on the service label, the first security capability corresponding to the service label.

In some embodiments, the service label of the first data includes, for example, information such as a to-be-used security capability and a credential of the security capability. The first data carries the service label of the first data, and the target second device may determine, based on the service label, the first security capability used to process the first data. Then, the target second device processes the first data in the target second secure environment by using the first security capability, to obtain the first processing result of the first data.

For technical effects corresponding to any one of the second aspect and the implementations of the second aspect, refer to technical effects corresponding to any one of the first aspect and the implementations of the first aspect. Details are not described herein again.

According to a third aspect, a data processing apparatus according to independent claim 10 is provided.

According to the third aspect, the determining a target second secure environment that is in the one or more second secure environments and that includes a first security capability includes: obtaining first security capability information, where the first security capability information includes a security capability included in the one or more second secure environments; and determining the target second secure environment based on the first security capability information. According to any one of the third aspect or the implementations of the third aspect, when the processor reads the computer-readable instructions from the memory, the data processing apparatus is further enabled to perform the following operation: agreeing on a first key for data transmission between the first secure environment and the target second secure environment with a target second device including the target second secure environment, where the first key is used to encrypt the first data and the first processing result that are transmitted through the second connection.

According to any one of the third aspect or the implementations of the third aspect, when the processor reads the computer-readable instructions from the memory, the data processing apparatus is further enabled to perform the following operation: deleting the first key.

According to any one of the third aspect or the implementations of the third aspect, when the processor reads the computer-readable instructions from the memory, the data processing apparatus is further enabled to perform the following operation: determining that the target second secure environment includes a second security capability, where the second security capability is used to process to-be-processed second data in the first secure environment; and agreeing on a second key for data transmission between the first secure environment and the target second secure environment with the target second device, where the second key is used to encrypt the second data and a second processing result corresponding to the second data that are transmitted through the second connection.

According to any one of the third aspect or the implementations of the third aspect, when the processor reads the computer-readable instructions from the memory, the data processing apparatus is further enabled to perform the following operation: receiving, through the first connection, first information that is of the one or more second secure environments and that is sent by the one or more second devices; determining, based on the first information, that the one or more second secure environments are secure; and separately establishing one or more secure connections between the first secure environment and the one or more second secure environments, where the secure connection is used to obtain the first security capability information of the one or more second devices, and the second connection is a connection that corresponds to the target second secure environment and that is in the one or more secure connections.

According to any one of the third aspect or the implementations of the third aspect, when the processor reads the computer-readable instructions from the memory, the data processing apparatus is further enabled to perform the following operation: sending, through the secure connection, second security capability information that is of a security capability included in the first secure environment and that is sent to the one or more second devices.

According to any one of the third aspect or the implementations of the third aspect, the obtaining security capability information includes: obtaining security capability information that is locally stored; and/or obtaining security capability information sent by a central node.

According to any one of the third aspect or the implementations of the third aspect, when the processor reads the computer-readable instructions from the memory, the data processing apparatus is further enabled to perform the following operation: sending second security capability information that is of a security capability included in the first secure environment and that is sent to the central node.

According to any one of the third aspect or the implementations of the third aspect, when the processor reads the computer-readable instructions from the memory, the data processing apparatus is further enabled to perform the following operation: disconnecting the first connection to the target second device including the target second secure environment; and deleting security capability information that is about the target second secure environment of the target second device and that is in the security capability information.

According to any one of the third aspect or the implementations of the third aspect, the security capability included in the one or more second secure environments includes a security capability of a secure-state application running in the one or more second secure environments, and/or a secure-state service supported by the one or more second secure environments.

According to any one of the third aspect or the implementations of the third aspect, the first secure environment or the second secure environment is a trusted execution environment TEE or a confidential computing environment.

According to any one of the third aspect or the implementations of the third aspect, when the processor reads the computer-readable instructions from the memory, the data processing apparatus is further enabled to perform the following operation: detecting a first operation of a user; determining to-be-processed data of a first service corresponding to the first operation; determining first data based on the to-be-processed data of the first service; or obtaining a second service; and determining first data in to-be-processed data of the second service.

For technical effects corresponding to any one of the third aspect and the implementations of the third aspect, refer to technical effects corresponding to any one of the first aspect and the implementations of the first aspect. Details are not described herein again.

According to a fourth aspect, as an example for a better understanding, a data processing apparatus is provided. The data processing apparatus includes a processor and a memory. The memory is coupled to the processor, and the memory is configured to store computer-readable instructions. When the processor reads the computer-readable instructions from the memory, the data processing apparatus is enabled to perform the following: receiving, by a second secure environment of a second device through a second connection, first data sent by a first secure environment of the first device, where the second connection is a connection between the first secure environment and the second secure environment, and the first data is to-be-processed data in the first secure environment; processing the first data by using a first security capability, to obtain a first processing result; and sending the first processing result to the first secure environment through the second connection.

According to the fourth aspect, when the processor reads the computer-readable instructions from the memory, the data processing apparatus is further enabled to perform the following operation: agreeing on a first key for data transmission between the first secure environment and the second secure environment with the first device, where the first key is used to encrypt the first data and the first processing result.

According to any one of the fourth aspect or the implementations of the fourth aspect, when the processor reads the computer-readable instructions from the memory, the data processing apparatus is further enabled to perform the following operation: determining that the first device has a permission to invoke the first security capability.

According to any one of the fourth aspect or the implementations of the fourth aspect, the first data carries a service label corresponding to the first data; and when the processor reads the computer-readable instructions from the memory, the data processing apparatus is further enabled to perform the following operation: determining, based on the service label, a first security capability corresponding to the service label.

For technical effects corresponding to any one of the fourth aspect and the implementations of the fourth aspect, refer to technical effects corresponding to any one of the second aspect and the implementations of the second aspect. Details are not described herein again.

According to a fifth aspect, an embodiment of this application provides a data processing apparatus. The data processing apparatus has a function of implementing the data processing method according to any one of the first aspect and the possible implementations of the first aspect. The function may be implemented by hardware, or may be implemented by hardware executing corresponding software. The hardware or the software includes one or more modules corresponding to the function.

For technical effects corresponding to any one of the fifth aspect and the implementations of the fifth aspect, refer to technical effects corresponding to any one of the first aspect and the implementations of the first aspect. Details are not described herein again.

According to a sixth aspect, as an example for a better understanding, an embodiment of this application provides a data processing apparatus. The data processing apparatus has a function of implementing the data processing method according to any one of the second aspect and the possible implementations of the second aspect. The function may be implemented by hardware, or may be implemented by hardware executing corresponding software. The hardware or the software includes one or more modules corresponding to the function.

For technical effects corresponding to any one of the sixth aspect and the implementations of the sixth aspect, refer to technical effects corresponding to any one of the second aspect and the implementations of the second aspect. Details are not described herein again.

According to a seventh aspect, a computer-readable storage medium according to independent claim 11 is provided. The computer-readable storage medium stores a computer program (which may also be referred to as instructions or code). When the computer program is executed by a data processing apparatus, the data processing apparatus is enabled to perform the method in any one of the first aspect or the implementations of the first aspect, or, as an example for a better understanding, the data processing apparatus is enabled to perform the method in any one of the second aspect or the implementations of the second aspect.

For technical effects corresponding to any one of the seventh aspect and the implementations of the seventh aspect, refer to technical effects corresponding to any one of the first aspect and the implementations of the first aspect. Details are not described herein again.

According to an eighth aspect, an embodiment of this application provides a computer program product according to independent claim 12. When the computer program product runs on a data processing apparatus, the data processing apparatus is enabled to perform the method in any one of the first aspect or the implementations of the first aspect, or, as an example for a better understanding, the data processing apparatus is enabled to perform the method in any one of the second aspect or the implementations of the second aspect.

For technical effects corresponding to any one of the eighth aspect and the implementations of the eighth aspect, refer to technical effects corresponding to any one of the first aspect and the implementations of the first aspect. Details are not described herein again.

According to a ninth aspect, as an example for a better understanding, an embodiment of this application provides a circuit system. The circuit system includes a processing circuit. The processing circuit is configured to perform the method according to any one of the first aspect or the implementations of the first aspect; or the processing circuit is configured to perform the method according to any one of the second aspect or the implementations of the second aspect. For technical effects corresponding to any one of the ninth aspect and the implementations of the ninth aspect, refer to technical effects corresponding to any one of the first aspect and the implementations of the first aspect. Details are not described herein again.

According to a tenth aspect, as an example for a better understanding, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect or the implementations of the first aspect; or the at least one processor performs the method according to any one of the second aspect or the implementations of the second aspect.

For technical effects corresponding to any one of the tenth aspect and the implementations of the tenth aspect, refer to technical effects corresponding to any one of the first aspect and the implementations of the first aspect. Details are not described herein again.

### BRIEF DESCRIPTION OF DRAWINGS

FIG. 1 is a diagram of an architecture of an ARM TrustZone system according to an embodiment of this application;
FIG. 2 is a diagram of a communication system to which a data processing method is applied according to an embodiment of this application;
FIG. 3A is a diagram 1 of a hardware structure of a first device according to an embodiment of this application;
FIG. 3B is a diagram 2 of a hardware structure of a first device according to an embodiment of this application;
FIG. 4 is a diagram of a method for establishing a secure connection in a data processing process according to an embodiment of this application;
FIG. 5 is a diagram of module interaction according to an embodiment of this application;
FIG. 6 is a diagram 1 of a data processing method according to an embodiment of this application;
FIG. 7 is a diagram 2 of a data processing method according to an embodiment of this application;
FIG. 8 is a diagram 3 of a data processing method according to an embodiment of this application;
FIG. 9 is a diagram 4 of a data processing method according to an embodiment of this application;
FIG. 10 is a diagram of a structure of a first device according to an embodiment of this application; and
FIG. 11 is a diagram of a structure of a second device according to an example for a better understanding.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design solution. Exactly, use of the term "example", "for example", or the like is intended to present a related concept in a specific manner.

In some scenarios, a secure environment, for example, including a trusted execution environment (trusted execution environment, TEE) or a confidential computing environment, is set in an electronic device (for example, a mobile phone or a tablet computer) or a server, and privacy information or secret information is processed in the secure environment, to protect security of privacy information or secret information of a person or a device.

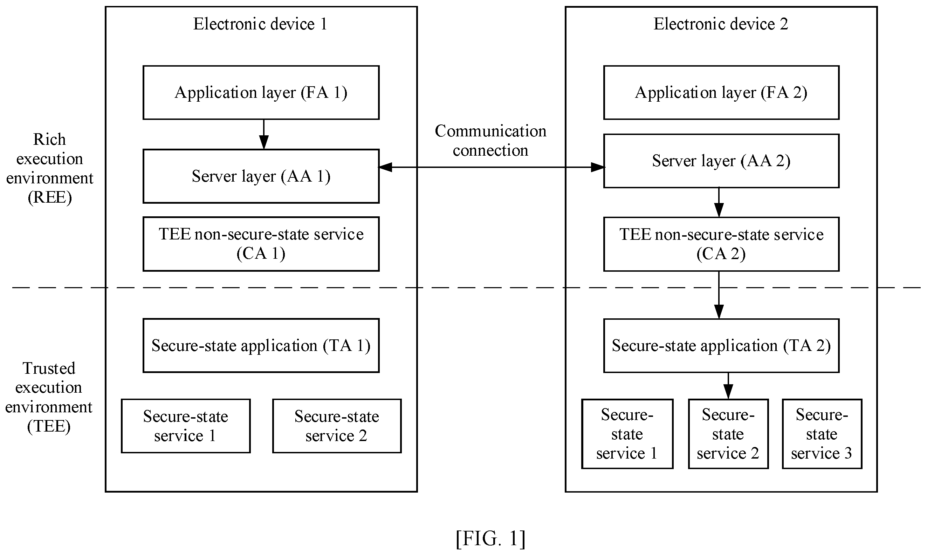

For example, as shown in FIG. 1, an ARM trusted zone (TrustZone)-based electronic device includes a rich execution environment (rich execution environment, REE) and a TEE. The REE is also referred to as a common execution environment, and includes a rich execution environment operating system (rich execution environment operating system, REE OS) and a client application (client application, CA) that run on a general-purpose processor. A TEE non-secure-state service runs on the REE OS in a form of the CA.

A capability of the CA may be abstracted as an ability, and one CA may have a plurality of capabilities, that is, may include a plurality of abilities. The ability may include a feature ability (Feature Ability, FA) and an atomic ability (atomic Ability, AA). The FA of an application layer is used to provide an available service at a top layer of the electronic device for a user. The FA includes 1 to N AAs. The AA provides a basic service capability for the FA to invoke. The FA is used to orchestrate and assemble the AAs, to complete a service indicated by the user.

The TEE is also referred to as a secure execution environment, and in which a trusted execution environment operating system (trusted execution environment operating system, TEE OS) may be run to provide a trusted secure-state service (TService, for example, secure storage, a security key, secure encryption and decryption, and a secure driver) for the CA. These secure-state services may run in the TEE OS in a form of a trust application (trust application, TA) (or referred to as a secure-state application).

As shown in FIG. 1, after obtaining a service, the CA sends an operation request to the TA in a fixed command format, to ensure data security. After parsing command code, the TA can only process security data in the TEE. As a result, the security data cannot be exchanged.

In addition, security capabilities of the TA and the secure-state service in the TEE are fixed, and the electronic device can process security data only by using the security capability in the TEE of the electronic device. If the electronic device cannot process the security data by using the security capability of the electronic device, service processing fails.

In addition, the TA in the TEE cannot be run across devices. If local resources required by the TA are insufficient, the TA cannot be loaded and run. This leads to a service failure.

These problems limit a secure computing capability in the TEE and affect user experience.

Based on this, a developer proposes that a TEE security capability of another electronic device is invoked based on the REE of the electronic device. For example, as shown in FIG. 1, an electronic device 1 and an electronic device 2 may establish an REE communication connection. After triggering a service at an application layer (FA 1), the electronic device 1 determines that the current service cannot be processed by using a security capability in a TEE of the electronic device 1, and then sends, through interaction between service layers (AA 1 and AA 2), the service indication to the electronic device 2 for processing. For example, the electronic device 1 receives a facial recognition request, and does not have a facial recognition capability in the TEE of the electronic device 1. In this case, the electronic device 2 collects a user face, and performs facial recognition processing in a TEE of the electronic device 2. Then, the electronic device 2 sends a processing result to the electronic device 1, and the electronic device 1 can respond to a service request of the user.

It can be learned that, in the foregoing method, a function shared network is essentially formed on an REE side, which is inconvenient for the user to operate. In addition, because a service needs to be processed according to a request of another electronic device, each security capability needs to be adapted in advance on the REE side, and cannot be automatically sensed based on a required service capability.

In the foregoing method, generally, a weak device having a weak security capability needs to send a processing request to a strong device having a strong security capability, and a secure computing capability of the weak device cannot be fully used. In addition, there is no resource sharing in the foregoing method, and a service request still cannot be completed in a scenario in which a secure resource like secure storage is required.

In view of this, embodiments of this application provide a data processing method. A shared network in secure environments is established by establishing connections between secure environments of different devices, so that the different devices can borrow a security capability of another device through the connections, improving a processing capability in the secure environments of the devices, and further improving user experience.

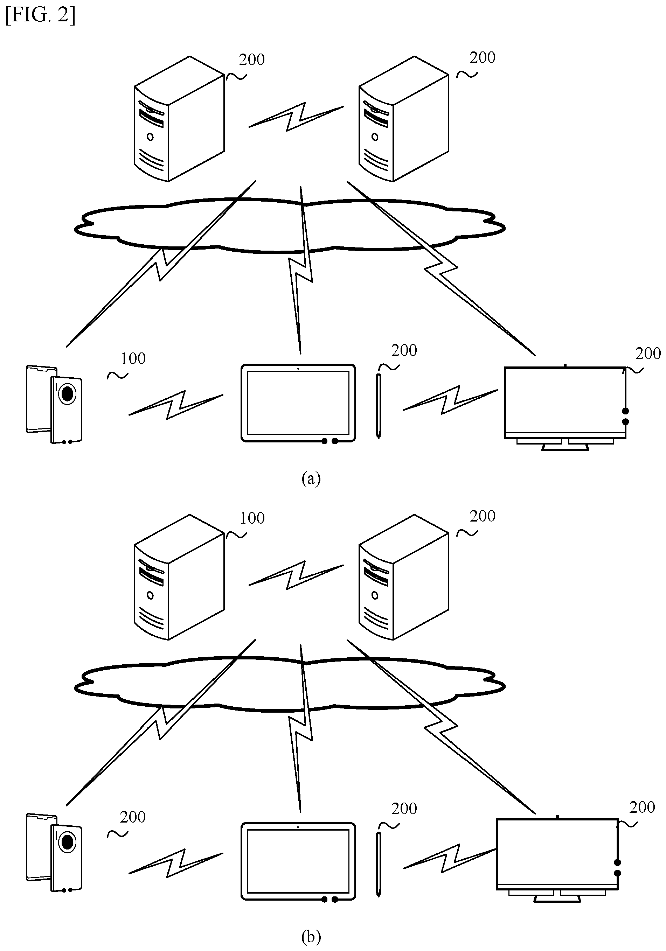

FIG. 2 is a diagram of a communication system to which a data processing method is applied according to an embodiment of this application. As shown in FIG. 2, the communication system includes a first device 100 and a second device 200. There are one or more second devices 200.

Optionally, the first device 100 or the second device 200 may be an electronic device or a server. As shown in (a) in FIG. 2, the first device 100 is an electronic device (for example, a mobile phone), and the second device 200 includes a plurality of electronic devices and a plurality of servers. As shown in (b) in FIG. 2, the first device 100 is a server, and the second device 200 includes a server and a plurality of electronic devices.

Optionally, the first device 100 or the second device 200 may be an electronic device or a server based on an ARM TrustZone architecture, or may be an electronic device or a server based on an ARM confidential compute architecture (Arm Confidential Compute Architecture, Arm CCA).

A secure environment configured in the first device 100 or the second device 200 based on the ARM TrustZone architecture is a TEE, and a secure environment configured in the first device 100 or the second device 200 based on the ARM CCA architecture is a confidential computing environment.

Optionally, when the first device 100 or the second device 200 is an electronic device, the first device 100 or the second device 200 may be, for example, a terminal device like a mobile phone, a tablet computer, a notebook computer, a large-screen device, an ultra-mobile personal computer (ultra-mobile personal computer, UMPC), a netbook computer, a personal digital assistant (personal digital assistant, PDA), a wearable device, or an artificial intelligence (artificial intelligence) device. An operating system installed in the first device 100 includes but is not limited to iOS^{®}, Android^{®}, Harmony^{®}, Windows^{®}, Linux^{®}, or another operating system. A specific type of the first device 100 or the second device 200 and an operating system installed on the first device 100 or the second device 200 are not limited in this application.

Optionally, when the first device 100 or the second device 200 is a server, the first device 100 or the second device 200 may be a device or a network device that has a computing function, for example, a cloud server or a network server. The first device 100 or the second device 200 may be a server, or may be a server cluster including a plurality of servers, or may be a cloud computing service center.

In some embodiments, a communication connection is established between the first device 100 and the second device 200, and the communication connection may be a wireless communication connection or a wired communication connection. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

For example, the first device 100 or the second device 200 supports a proximity discovery function. For example, after the first device 100 approaches the second device 200, the first device 100 or the second device 200 can discover each other, and then establish a wireless communication connection like a Wi-Fi peer-to-peer (peer-to-peer, P2P) connection or a Bluetooth connection. For another example, the first device 100 or the second device 200 establishes a wireless communication connection through a local area network. For example, the first device 100 or the second device 200 is connected to a same router.

For another example, the first device 100 or the second device 200 establishes a wireless communication connection through a cellular network, the internet, or the like. For example, the first device 100 accesses a cellular network through the router, and the second device 200 accesses the internet through the cellular network. In this way, the first device 100 or the second device 200 establishes a wireless communication connection.

For another example, the first device 100 or the second device 200 may alternatively establish a wireless communication connection through a third-party device in a local area network. The third-party device is, for example, a router, a gateway, an intelligent device controller, or a server.

For another example, the first device 100 establishes a wired communication connection to the second device 200 through a USB interface connection line.

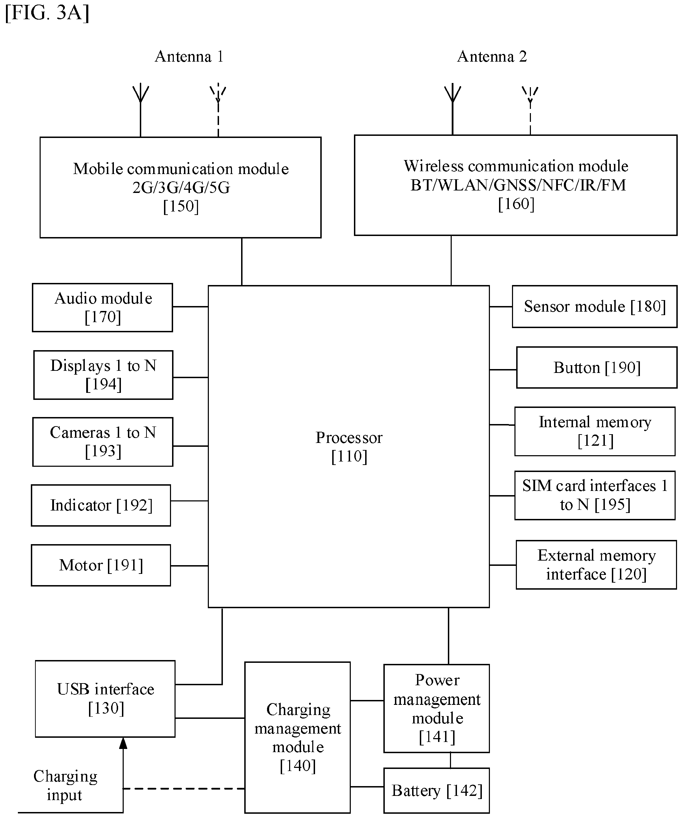

For example, FIG. 3A is a diagram of a structure in a case in which the first device 100 is an electronic device.

The first device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the first device 100. In some other embodiments of this application, the first device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first device 100. The processor 110 communicates with the display 194 through the DSI interface, to implement a display function of the first device 100. The USB interface 130 is an interface that conforms to a USB standard specification, and may be specifically a mini USB interface, a micro USB interface, a USB type-C interface, or the like. The USB interface 130 may be configured to connect to a charger to charge the first device 100, or may be configured to communicate data between the first device 100 and a peripheral device, or may be configured to connect to a headset for playing an audio through the headset. The interface may be further configured to connect to another first electronic device, for example, an AR device. It may be understood that, an interface connection relationship between the modules shown in embodiments of this application is merely an example for description, and does not constitute a limitation on the structure of the first device 100. In some other embodiments of this application, the first device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first device 100. The charging management module 140 may further supply power to the first electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the first device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the first device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution, applied to the first device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the first device 100 establishes a communication connection to the second device 200 through the mobile communication module 150 or the wireless communication module 160. Subsequently, the first device 100 may exchange device information through a communication connection to the second device 200, to establish a secure connection between secure environments of the two devices. Further, based on the secure connection between the secure environments, the first device 100 may invoke a security capability of the second device 200 to process to-be-processed data in the secure environment of the first device 100.

In some embodiments, the antenna 1 and the mobile communication module 150 in the first device 100 are coupled, and the antenna 2 and the wireless communication module 160 in the first device 100 are coupled, so that the first device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation systems, SBAS).

The first device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like. The display 194 includes a display panel. The display panel may be manufactured by using a liquid crystal display (liquid crystal display, LCD), for example, an organic light-emitting diode (organic light-emitting diode, OLED), an active-matrix organic light emitting (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the first device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the first device 100 may include one or N cameras 193, where N is a positive integer greater than 1.

The external memory interface 120 may be used to connect to an external storage card, for example, a micro SD card, to extend a storage capability of the first device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the first device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the first device 100.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The first device 100 may use the audio module 170 to implement music playing, recording, and the like. The audio module 170 may include a speaker, a receiver, a microphone, a headset jack, an application processor, and the like to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first device 100 may receive a button input, and generate a button signal input related to a user setting and function control of the first device 100. The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the first device 100. The first device 100 may support one or N SIM card interfaces, where N is a positive integer greater than 1.

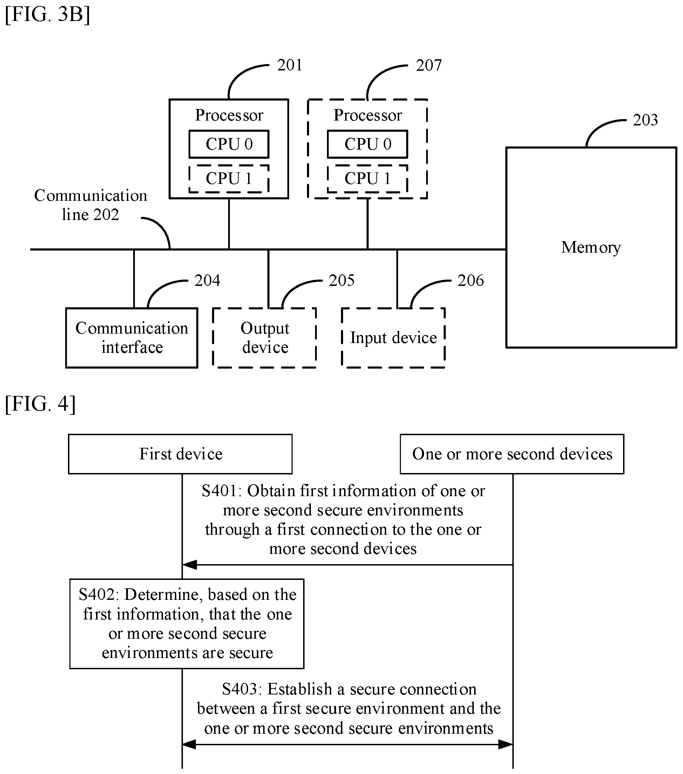

For example, FIG. 3B is a diagram of a structure in a case in which the first device 100 is a server. The first device 100 includes at least one processor 201, a communication line 202, a memory 203, and at least one communication interface 204. The memory 203 may alternatively be included in the processor 201.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path on which information is transferred between the foregoing components.

The communication interface 204 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in embodiments of this application.

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. The memory may alternatively be integrated with the processor.

The memory 203 is configured to store computer-executable instructions for implementing the solutions of this application, and the processor 201 controls the execution. The processor 201 is configured to execute the computer-executable instructions stored in the memory 203, to implement a data processing method provided in the following embodiments of this application. Optionally, the computer-executable instructions in embodiments of this application may also be referred to as application program code, instructions, a computer program, or another name. This is not specifically limited in embodiments of this application.

During specific implementation, in an embodiment, the processor 201 may include one or more CPUs, for example, a CPU 0 and a CPU 1 in FIG. 3B.

During specific implementation, in an embodiment, the first device 100 may include a plurality of processors, for example, the processor 201 and a processor 207 in FIG. 3B. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the first device 100 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

The following describes in detail the data processing method provided in embodiments of this application by using an example in which the first device 100 is a first device, the second device 200 is a second device, and the first device and the second device are devices based on an ARM TrustZone architecture. It should be noted that, for a data processing method of a device based on an ARM CCA architecture, refer to a data processing method described in the following embodiments.

Optionally, FIG. 4 is a schematic flowchart of a method for establishing a secure connection in a data processing process according to an embodiment of this application. As shown in FIG. 4, the method includes the following steps.

S401: A first device obtains first information of one or more second secure environments through one or more first connections to one or more second devices.

In some embodiments, the first device includes a first secure environment, the second security device includes a second secure environment, and the first secure environment or the second secure environment is a TEE based on an ARM TrustZone architecture, or a confidential computing environment based on an ARM CCA, or a secure environment based on another architecture.

In some embodiments, a first connection is established between the first device and the second device, and the first connection is a connection for communication between electronic devices or servers, for example, a Wi-Fi connection, a Bluetooth connection, or an NFC connection. Before a secure connection between the first device and the one or more second devices in a secure environment is established, a common connection (namely, the first connection) for exchanging device information needs to be established.

In some embodiments, the first information is a device certificate, for example, including a TEE ID, TEE version information, TEE certificate information, TEE OS version information, chip architecture information, device type information supported by the TEE OS, an integrity measurement value (for example, a signature hash value) of TEE OS code, TEE OS vendor information, and a security level.

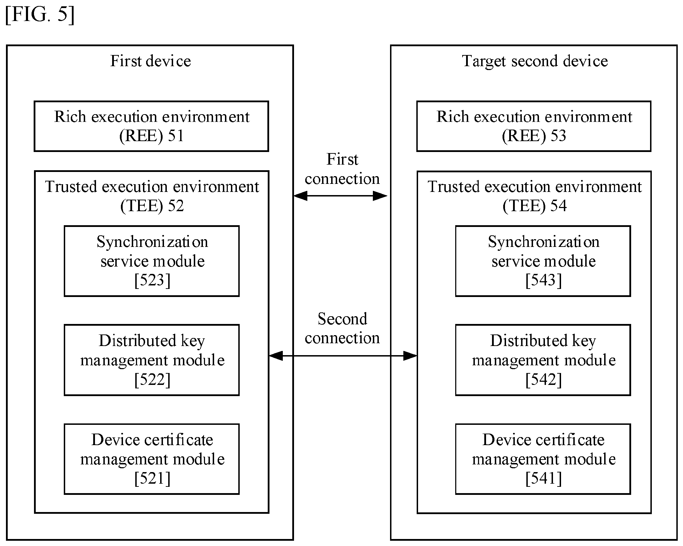

For example, as shown in FIG. 5, the first device includes an REE 51 and a TEE 52, the one or more second devices include a target second device, and the target second device includes an REE 53 and a TEE 54. The TEE 52 of the first device includes a device certificate management module 521, and the TEE 54 of the target second device also includes a device certificate management module 541. The device certificate management module is configured to manage a device certificate.

Optionally, when determining to establish a secure connection to the target second device, the first device may send a secure connection establishment request to the target second device, where the secure connection establishment request may carry a device certificate that is of a secure environment of the first device and that is managed by the device certificate management module 521, and is used to exchange the device certificate with the target second device, to verify security of secure environments of the two.

For example, after the first device establishes the first connection to the target second device, the device certificate management module 521 in the first device may send the device certificate of the first device to the second device through the first connection, and receive, through the first connection, a device certificate (for example, the first information) that is of the second device and that is sent by the device certificate management module 541 of the second device.

For another example, after establishing the first connection, the first device temporarily does not exchange a device certificate (that is, temporarily does not establish a secure connection between secure environments). Subsequently, in response to an operation in which a user indicates to perform a security service (for example, a service that needs to be processed on the TEE side is detected on the REE side), the first device exchanges a device certificate with the one or more second devices through the first connection.

For another example, after establishing the first connection, the first device temporarily does not exchange the device certificate. Subsequently, after detecting the operation in which the user indicates to perform the security service, the first device determines that the first device does not have a security capability of processing the security service. The first device displays interface prompt information, to prompt the user whether the security service needs to be processed by using a security capability of another device. In response to an operation in which the user invokes a security capability of another device, the first device exchanges a device certificate with the one or more second devices through the first connection.

S402: The first device determines, based on the first information, that the one or more second secure environments are secure.

In some embodiments, after obtaining the first information (for example, the device certificate of the second device) of the TEE of the second device through the first connection, the first device may determine, based on the first information, whether the second secure environment of the second device (namely, the TEE of the second device) is secure.

For example, if the first device determines, based on the first information and the signature hash value (hash), that code is complete, and determines that the second secure environment is not modified, the first device may determine that the second secure environment is secure.

S403: The first device establishes a secure connection between the first secure environment and one or more second secure environments.

In some embodiments, after determining that the second secure environment of the second device is secure, the first device may establish a secure connection between the first secure environment of the first device and the second secure environment of the second device. In a process in which the first device determines whether the second secure environment is secure, the peer second device may also receive the device certificate sent by the first device, and therefore may determine whether the first secure environment is secure.

Therefore, after determining that secure environments of the peer devices are secure, both the first device and the second device may establish secure connections to the peer devices in the secure environments.

For example, as shown in FIG. 5, after exchanging device certificates through the first connection, the first device and the target second device determine, based on the device certificates, that secure environments in the peer devices are secure. Then, the first device may establish a second connection between the TEE 52 and the TEE 54 (the secure connection includes the second connection).

In some other embodiments, in step S402, either of the first device and the peer second device determines that the secure environment in the peer device is insecure, and may determine that security authentication fails. In step S403, establishment of the current secure connection may be canceled.

In this way, the first device and the second device establish a secure connection between secure environments by exchanging device certificates, and subsequently may invoke a security capability of another device through the secure connection, to implement security capability sharing in a distributed scenario.

In some scenarios, after establishing a secure connection to the one or more second devices, the first device may obtain security capability information of the one or more second devices through the secure connection, so that when a security service needs to be processed, the first device may determine whether a security capability of another device needs to be invoked to process the security service. In other words, the secure connection may be used to obtain security capability information of another device, and send the security capability information to the another device. In addition, the first device may be further configured to invoke a security capability of another device.

The following describes a process in which the first device performs data processing by invoking a security capability in a second secure environment of another second device.

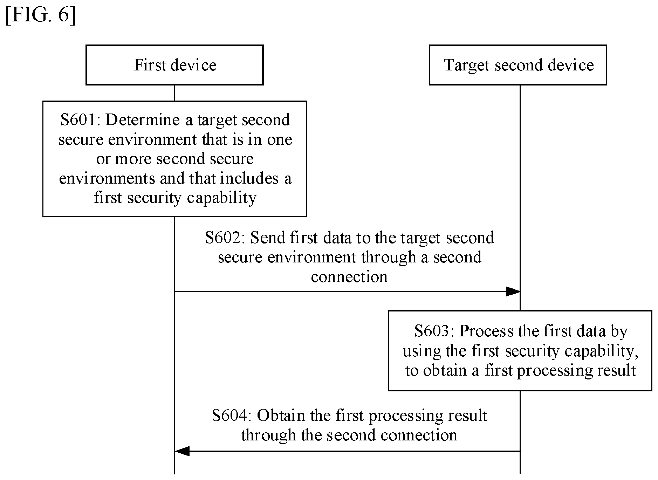

Optionally, FIG. 6 is a schematic flowchart of a data processing method according to an embodiment of this application. As shown in FIG. 6, the method includes the following steps. S601: A first device determines a target second secure environment that is in one or more second secure environments and that includes a first security capability.

In some embodiments, the first device establishes one or more first connections to one or more second devices. The first device includes a first secure environment, and the one or more second devices include one or more second secure environments corresponding to the one or more second devices.

In some embodiments, TEEs (namely, secure environments) of different devices have a same security capability or different security capabilities. The security capability is a security capability of a system in the secure environment (for example, a security capability of a TEE OS), and a corresponding security capability is provided in a form of a secure-state service (TService). Optionally, the secure-state service includes, for example, secure storage, a security key, secure encryption and decryption, a secure driver, a secure clock, a secure peripheral, and a secure CPU. Optionally, the one or more second devices include a target second device, the target second device includes a target second secure environment, and the target second secure environment includes a first security capability.

According to this disclosure, after determining to-be-processed first data in the first secure environment, the first device determines that a security capability in the first secure environment of the first device is insufficient to process the first data. The first device needs to invoke a security capability in a second secure environment of another second device to process the first data or assist in processing the first data. Therefore, the first device needs to determine, based on the first security capability that can be used to process the to-be-processed first data, the target second secure environment including the first security capability.

In view of this, the first device needs to obtain security capabilities in second secure environments of second devices, to determine required second secure environments (namely, target second secure environments) of some or all of the second devices.

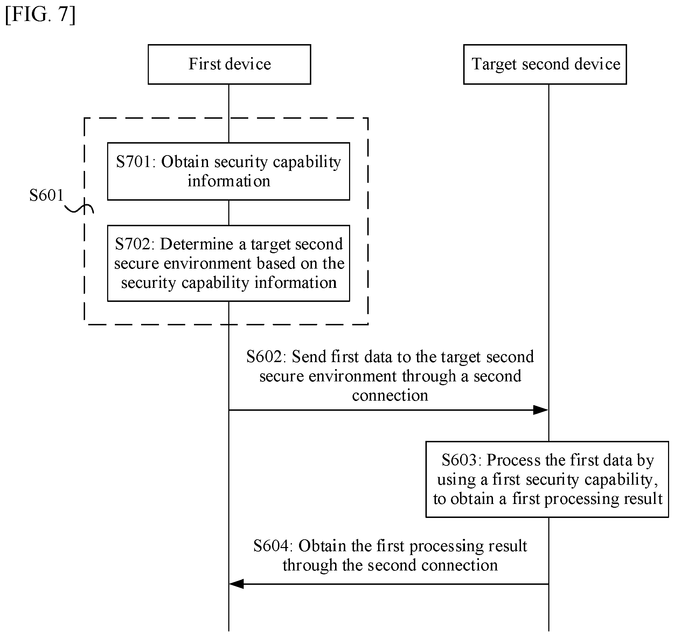

Optionally, as shown in FIG. 7, step S601 may include step S701 and step S702.

S701: The first device obtains security capability information.

In some embodiments, after establishing a secure connection, the first device or the second device may generate security capability information including a security capability of the first device or the second device. The security capability information may exist in a file format, for example, T-Profile.

For example, the security capability of the first device includes secure storage, and the first device may determine that corresponding security capability information includes information such as a size and an attribute of storage space.

For another example, the security capability of the first device includes a secure clock, and the first device may determine that corresponding security capability information includes information about a time service.

For still another example, the security capability information of the first device includes information such as a size and an attribute of a replay protected memory block (replay protected memory block, RPMB).

In some embodiments, the first device provides a synchronization interface of the T-Profile, and completes synchronization of security capability information with the second device in a communication system through the interface.

For example, after establishing the secure connection to the one or more second devices by using the method shown in FIG. 4, the first device may obtain security capability information (namely, first security capability information) of the one or more second devices through the secure connection.

For another example, the first device locally creates an account book used to record security capability information, and records the security capability information (namely, second security capability information) of the first device and the obtained security capability information (namely, the first security capability information) of the second device in the account book. Optionally, the first device or the second device broadcasts the security capability information of the first device or the second device based on a preset periodicity, and/or broadcasts updated security capability information after determining that the security capability of the first device or the second device is updated. After receiving broadcast information sent by the second device, the first device updates the security capability information that is of the second device and that is recorded in the local account book. Then, when a security capability of another device in the communication system needs to be determined, security capability information is obtained from the locally stored account book.

For still another example, a central node is disposed in the communication system, the central node can be configured to manage security capability information of each device in the communication system, and the first device and the second device included in the communication system may send security capability information of the first device and the second device to the central node for synchronization. When determining that the security capability of the another device needs to be invoked, the first device may request the central node to obtain the security capability information of the another device. Optionally, the central node is, for example, an electronic device that can maintain communication in the communication system, an electronic device with a strong computing capability, or a non-battery device (namely, a device that can ensure operating duration). For example, as shown in FIG. 5, the TEE 52 of the first device includes a synchronization service module 523, and the synchronization service module 523 is configured to: manage a security capability of the TEE 52, and synchronize security capability information of another device in the communication system through the secure connection. The TEE 54 of the target second device includes a synchronization service module 543, and the synchronization service module 543 is configured to: manage a security capability of the TEE 54, and synchronize security capability information of another device in the communication system through the secure connection.

In some embodiments, when the first device needs to invoke the security capability of the another device, the first device may obtain the security capability information. The security capability information includes a security capability included in one or more second secure environments in which a secure connection is established to the first device.

Optionally, the first device obtains security capability information of the one or more second devices through a secure connection, and/or obtains locally stored security capability information, and/or obtains security capability information sent by the central node.

S702: The first device determines the target second secure environment based on the security capability information.

In some embodiments, after obtaining the security capability information of the one or more second devices, the first device may determine, based on the security capability information, the security capability included in the one or more second secure environments.

Optionally, the security capability included in the one or more second secure environments includes a security capability of a secure-state application running in the one or more second secure environments, and/or a secure-state service supported by the one or more second secure environments.

For example, in the ARM TrustZone architecture shown in FIG. 1, the TEE of the electronic device includes a secure-state application (TA) and a secure-state service (TService), and the secure-state application and the secure-state service have corresponding security capabilities. The first device may determine, based on the obtained security capability information, the security capability of the secure-state application and/or the secure-state service included in the secure environment of the second device.

It should be noted that, with reference to the foregoing description of the architecture shown in FIG. 1, the secure-state service may run on the TEE OS in a form of a trusted application (or referred to as a secure-state application). In other words, the secure-state application integrates one or more secure-state services, and the secure environment of each device may include one or more secure-state applications and/or one or more secure-state services. Subsequently, that the first device invokes a security capability of the target second device may be that the first secure environment of the first device invokes a secure-state application and/or a secure-state service in the target second secure environment of the target second device. Details are not described again below.

In some embodiments, after detecting a to-be-processed service, the first device determines that the first device does not have a security capability of processing the service, or after having a security capability of processing only a part of data of the service, the first device may allocate the service to the target second secure environment of the target second device for processing by using the foregoing step S601.

For example, the first device may obtain the security capability information of the another device in the communication system by using step S701, and then may determine, by using step S702, a secure environment in which a security capability of processing the service is configured. In this case, subsequently, the first device may send data that corresponds to the service and that cannot be processed by the first device to the determined secure environment for processing (that is, performing the following step S602).

For example, as shown in FIG. 5, the first device determines, based on the security capability information obtained by the synchronization service module 523 in the TEE 52 of the first device, that the TEE 54 (namely, the target second secure environment) in the target second device has the first security capability for processing the to-be-processed data. For example, the synchronization service module 523 stores a table that includes security capability information of all devices in the communication system, and the first device determines, in a table lookup manner, that the TEE 54 in the target second device has the required first security capability.

S602: The first device sends first data to the target second secure environment through a second connection.

In some embodiments, after determining that the target second secure environment in which the first security capability used to process the first data is configured, the first device may send, through the second connection, the first data to the target second device including the target second secure environment for processing.

In this way, a data processing requirement in a secure environment is met, and user experience is improved.

S603: The target second device processes the first data by using the first security capability, to obtain a first processing result.

In some embodiments, after receiving the first data, the target second device may send the first data to the target second secure environment, and process the first data by using the first security capability.

Optionally, the first data carries a service label of the first data, and the target second device may determine, based on the service label, the first security capability used to process the first data. Then, the target second device processes the first data in the target second secure environment by using the first security capability, to obtain the first processing result of the first data. The service label of the first data includes, for example, information such as a to-be-used security capability and a credential of the security capability.

For example, after processing the first data by using the first security capability, the TEE OS of the target second device may determine the first processing result.

In some embodiments, a permission determining module may be further configured in the target second secure environment of the target second device, and is configured to determine whether the first device has a permission to invoke the first security capability. For example, a service label carried in the first data sent by the first device may further include a device identifier of the first device, and the target second device may determine a permission of the first device based on the device identifier. After determining the permission to invoke the first security capability, the target second device processes the obtained first data by using the first security capability.

In some embodiments, the first security capability may be a complete security capability of a secure-state application in the target second secure environment of the target second device, or may be a part of a capability (for example, a secure-state service) of a secure-state application. S604: The first device obtains the first processing result through the second connection.

In some embodiments, after determining the first processing result, the target second device sends the first processing result from the target second secure environment to the first secure environment of the first device through the second connection. Correspondingly, the first secure environment of the first device receives the first processing result.

In this way, security capabilities and security resources of different devices are shared through interaction between the secure environments of the different devices. In addition, on the basis of ensuring data security, a REE does not need to be adapted in advance (in other words, an application capability on a REE side does not need to be customized). A security capability of another device can be adaptively invoked without being perceived by a user, to meet a requirement of the user and reduce operation difficulty of the user.

In some scenarios, after determining that the first security capability in the target second secure environment of the target second device needs to be used, the first device may agree on a first key for data transmission with the target second secure environment of the target second device, to ensure security of data transmission between secure environments.

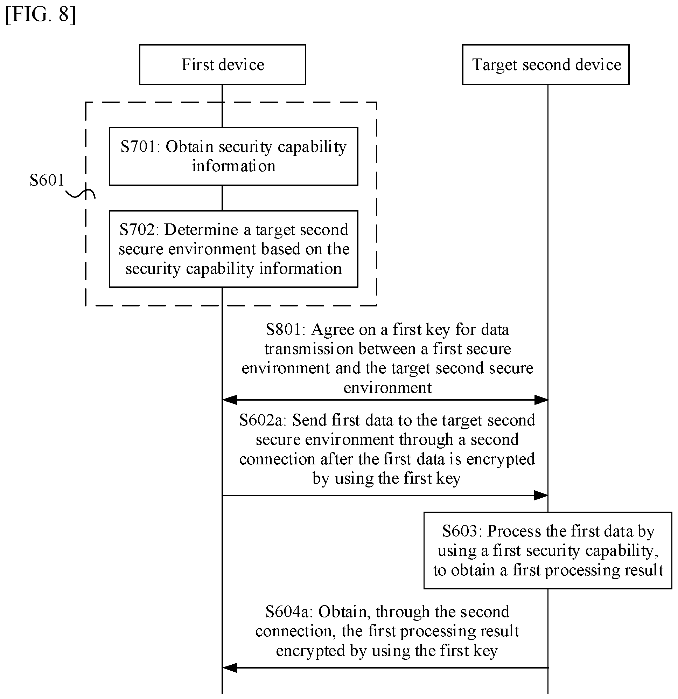

Optionally, as shown in FIG. 8, after step S702, the method may further include step S801. S801: The first device and the target second device agree on a first key for data transmission between the first secure environment and the target second secure environment.

In some embodiments, to ensure communication security in a secure environment, the first device and the target second device need to agree on a security key for current communication, to encrypt transmission data in a communication process. Optionally, the first device and the target second device may agree on the first key through the second connection.

For example, as shown in FIG. 5, the TEE 52 of the first device includes a distributed key management module 522, and the TEE 54 of the target second device includes a distributed key management module 542, which are separately configured to: agree on and manage respective secure communication keys. After determining, through the synchronization service module 523, that the TEE 54 of the target second device includes a security capability for processing the to-be-processed first data, the first device may agree on an encryption key (namely, the first key) of the second connection with the distributed key management module 542 through the distributed key management module 522.

For example, the first key is determined by using a public-private key pair. For a specific key agreement method, refer to the conventional technology. This is not specifically limited in embodiments of this application.

In some embodiments, after establishing the secure connection to the one or more second devices in step S403, the first device may agree on, with the one or more second devices, a security key used to encrypt data transmitted over the secure connection. Then, in a process of obtaining the security capability information (that is, step S701), to-be-transmitted security capability information is encrypted by using the determined security key. Therefore, security of the security capability information is ensured. In other words, step S801 may be performed before step S701. In some embodiments, after completing the key agreement between the first device and the target second device in the secure environment, the first device may encrypt, by using the first key determined after the agreement, the first data transmitted in step S602, and encrypt the first processing result transmitted in step S604.

Optionally, as shown in FIG. 8, step S602 may include step S602a, and step S604 may include step S604a.

S602a: The first device sends the first data to the target second secure environment through a second connection after the first data is encrypted by using the first key.

In some embodiments, after the first device and the target second device determine the first key through agreement. After determining the first data to be processed by the target second device, the first device may encrypt the first data by using the first key, and send, through the second connection, the encrypted first data to the target second secure environment of the target second device for processing. Correspondingly, after receiving the encrypted first data, the target second device may decrypt the obtained first data based on the first key determined through agreement. S604a: The first device obtains, through the second connection, the first processing result encrypted by using the first key.

In some embodiments, after determining the first processing result, the target second device encrypts the first processing result by using the first key, and then sends the encrypted first processing result from the target second secure environment to the first secure environment of the first device through the second connection. Correspondingly, the first secure environment of the first device receives the first processing result, and may decrypt the received first processing result based on the first key.

Based on the data processing method shown in FIG. 6 to FIG. 8, the following describes in detail related content of the to-be-processed first data in the first secure environment of the first device. In some scenarios, after detecting a to-be-processed security service and determining that the security service cannot be independently processed by using a security capability of the first device, the first device triggers step S701 to obtain security capability information of another device in the communication system.

For example, the first device detects a first operation of the user, determines to-be-processed data of a first service corresponding to the first operation, and determines the first data based on the to-be-processed data of the first service. The first data may be all data or a part of data of the first service. When determining that the first data cannot be processed by using the security capability of the first device, the first device may obtain security capability information, to determine a device that can process the first data.

For example, the first device is a large-screen device, a financial product application is installed on the large-screen device, and a corresponding tangible user interface (tangible user interface, TUI) is configured on the large-screen device. The TUI is used to display information such as a password entered by the user on a security keyboard. After detecting the password and to-be-operated amount of money that are entered by the user on the TUI, the large-screen device determines that the large-screen device does not have a security key capability, and may perform step S701 to obtain security capability information of another device in the communication system. Then, the large-screen device determines that a mobile phone (the target second device) connected to the large-screen device has a security key capability (that is, step S702), and may agree on a first key for the secure communication with the mobile phone (that is, step S801). Then, the large-screen device encrypts, by using the first key, the received password and amount of money that are entered by the user, and sends the encrypted password and amount of money to a target second secure environment of the mobile phone through the second connection (that is, step S602a). After receiving the password and the amount of money, the mobile phone interacts with a cloud server (for example, a bank server) to verify the password, to determine whether a transaction of the current amount of money is allowed, and determine a first processing result (that is, step S603). The mobile phone may send the encrypted first processing result to the large-screen device through the second connection (that is, step S604a). The large-screen device determines, based on the obtained first processing result, whether this security verification succeeds, and displays a corresponding processing result.

For another example, in response to an obtained second service, the first device may alternatively determine the first data in to-be-processed data of the second service.

For example, the first device is a server 1, and the first device obtains a request for storing data by using a secure storage capability, determines that the first device does not have a secure storage capability, and may perform step S701 to obtain security capability information of another device in the communication system. Then, the server 1 determines that a secure storage capability is configured in a secure environment of a server 2 (that is, step S702), and may agree on a first key for this secure communication with the server 2 (that is, step S801). Then, the server 1 sends, through the second connection, storage data encrypted by using the first key to a target second secure environment of the server 2 (that is, step S602a). After receiving the storage data, the server 2 may store the storage data by using the secure storage capability, and determine a first processing result, for example, a response indicating that storage is successful or fails (that is, step S603). The server 1 may obtain the first processing result sent by the server 2 (that is, step S604a), and determine whether storage is successful.

For another example, the first device is a server 1, and the first device obtains a request for storing data by using a secure storage capability, and determines that the first device has a secure storage capability, but insufficient storage space. The server 1 may perform step S701 to obtain security capability information of another device in the communication system. Then, the server 1 determines that a secure environment of a server 2 is configured with a secure storage capability and a size of available secure storage space of the server 2, and determines that a secure environment of a server 3 is configured with a secure storage capability and a size of available secure storage space of the server 3 (that is, step S702). The server 1 determines, based on the obtained security capability information, obtained storage data this time, and can complete all storage services only by using remaining secure storage space of the server 1, the available secure storage space of the server 2, and the available secure storage space of the server 3.

In this case, the server 1 may agree on a key 1 with the server 2 for this secure communication, and agree on a key 2 with the server 3 for this secure communication (that is, step S801). Then, the server 1 divides to-be-stored storage data into data 1 (data that needs to be securely stored on the server 1), data 2 (data that needs to be securely stored on the server 2), and data 3 (data that needs to be securely stored on the server 3) that are to be stored in a distributed manner, encrypts the data 2 by using the key 1, sends the encrypted data 2 to a secure environment of the server 2 through a secure connection to the server 2, encrypts the data 3 by using the key 2, and sends the encrypted data 3 to a secure environment of the server 3 through a secure connection to the server 3 (that is, step S602a). After receiving the corresponding data, each of the server 2 and the server 3 stores the data by using a secure storage capability, and determines a data storage response (that is, step S603). The server 1 may obtain the data storage responses sent by the server 2 and the server 3 (that is, step S604a), determine whether the data is successfully stored, and may directly determine whether the data 1 on the server 1 is successfully stored.

In this way, secure environments of devices in the communication system are integrated into a super secure environment (super TEE) by pooling security capabilities. Therefore, provided that the super secure environment has a security capability of processing to-be-processed data, the device in the communication system can process the to-be-processed data.

In addition, a security capability of each device is abstracted, to divide a security service. A plurality of devices cooperate to process a security service by using security capabilities of the devices, so that the security capability of each device is fully utilized.

It should be noted that, for division of the to-be-processed service by the first device, refer to the conventional technology. This is not specifically limited in embodiments of this application. As shown in the foregoing example, the first device may perform service division based on information such as a security capability and a security storage resource of the first device. For example, the large-screen device determines that the large-screen device collects a password, and the mobile phone verifies the password. For another example, the server 1 divides the to-be-stored data, and determines the data separately stored by the server 1, the server 2, and the server 3.

In some embodiments, in step S604a, the target second device deletes the first key after sending the first processing result. Correspondingly, after obtaining the first processing result, the first device deletes the first key.

In this way, each time the first device needs to invoke a security capability of another device, the first device needs to reagree on a key for current communication with the determined target second device, to avoid key leakage and impact on data transmission security.

For example, after deleting the first key, the first device obtains a second service, and determines to-be-processed second data of the second service. Then, the first device determines that the target second secure environment of the target second device includes a second security capability, and the second security capability may be used to process the to-be-processed second data in the first secure environment. In this case, the first device agrees on a second key for data transmission between the first secure environment and the target second secure environment with the target second device through the second connection, where the second key is used to encrypt the second data and a second processing result corresponding to the second data.

In some embodiments, after determining that the second device exits the communication system, the first device may delete the security capability information of the second device from the security information. For example, after disconnecting the first connection between the first device and the target second device including the target second secure environment, the first device may delete a security capability that is in the target second secure environment of the target second device and that is in the security capability information.

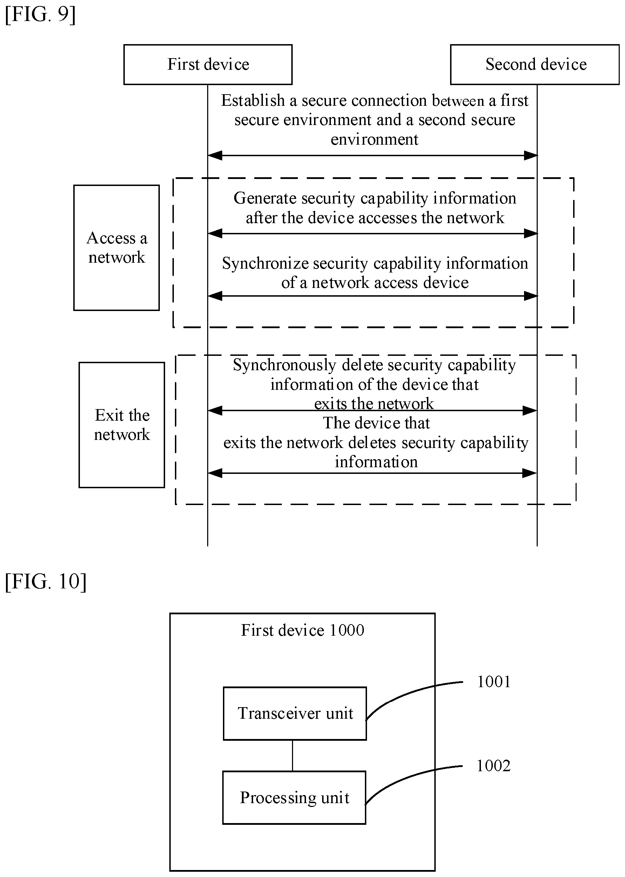

For example, as shown in FIG. 9, after accessing the communication system including the second device (for example, accessing a network), the first device establishes a secure connection between the first secure environment of the first device and the second secure environment of the second device. Then, the first device generates security capability information of the first device, sends the security capability information to another second device through the security connection, and synchronizes security capability information of the another second device through the secure connection, so as to complete synchronization of security capability information for network access of the device.

Then, after exiting the communication system (for example, exiting the network), the second device in the communication system synchronously broadcasts network exit information of the second device, and the first device may synchronously delete security capability information of the device that exits the network. In addition, the device that exits the network may also delete locally stored security capability information of another device in the communication system from which the device exits.

It may be understood that, after the first device disconnects the first connection to the target second device, the second connection between the secure environments of the two devices is automatically disconnected.

In this way, it is ensured that the security capability information in the communication system is synchronously updated, to avoid a case in which, as the synchronized security capability information includes security capability information of a device that does not access the communication system, another device fails to invoke a security capability of the device.

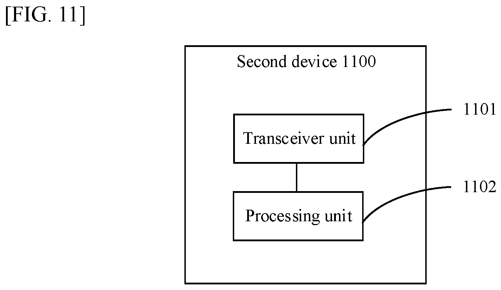

The foregoing describes in detail the data processing method provided in embodiments of this application with reference to FIG. 4 to FIG. 9. The following describes in detail the first device and the second device provided in embodiments of this application with reference to FIG. 10 and FIG. 11.

In a possible design, FIG. 10 is a diagram of a structure of a first device according to an embodiment of this application. As shown in FIG. 10, a first device 1000 includes a transceiver unit 1001 and a processing unit 1002. The first device 1000 may be configured to implement functions of the first device in the foregoing method embodiments. The first device is an electronic device or a server.

Optionally, the transceiver unit 1001 is configured to support the first device 1000 in performing S401 and S403 in FIG. 4, and/or configured to support the first device 1000 in performing S602 and S604 in FIG. 6, and/or configured to support the first device 1000 in performing S701 in FIG. 7, and/or configured to support the first device 1000 in performing S801, S602a, and S604a in FIG. 8.

Optionally, the processing unit 1002 is configured to support the first device 1000 in performing S402 in FIG. 4, configured to support the first device 1000 in performing S601 in FIG. 6, and/or configured to support the first device 1000 in performing S702 in FIG. 7.

The transceiver unit may include a receiving unit and a sending unit, may be implemented by a transceiver or a transceiver-related circuit component, and may be a transceiver or a transceiver module. Operations and/or functions of the units in the first device 1000 are respectively intended to implement corresponding procedures of the data processing method in the foregoing method embodiments. All related content of the steps in the foregoing method embodiments may be referenced to function descriptions of corresponding functional units. For brevity, details are not described herein again.

Optionally, the first device 1000 shown in FIG. 10 may further include a storage unit (not shown in FIG. 10), and the storage unit stores a program or instructions. When the transceiver unit 1001 and the processing unit 1002 execute the program or the instructions, the first device 1000 shown in FIG. 10 can perform the data processing method in the foregoing method embodiments.

For technical effects of the first device 1000 shown in FIG. 10, refer to the technical effects of the data processing method in the foregoing method embodiments. Details are not described herein again.

In addition to a form of the first device 1000, the technical solutions provided in this application may also be a functional unit or a chip in the first device, or an apparatus that is matched with the first device for use.

In a possible design, FIG. 11 is a diagram of a structure of a second device according to an example for a better understanding. As shown in FIG. 11, a second device 1100 includes a transceiver unit 1101 and a processing unit 1102. The second device 1100 may be configured to implement functions of the second device in the foregoing method embodiments. The second device is an electronic device or a server.

Optionally, the transceiver unit 1101 is configured to support the second device 1100 in performing S401 and S403 in FIG. 4, and/or configured to support the second device 1100 in performing S602 and S604 in FIG. 6, and/or configured to support the second device 1100 in performing S801, S602a, and S604a in FIG. 8.

Optionally, the processing unit 1102 is configured to support the second device 1100 in performing S603 in FIG. 6.

The transceiver unit may include a receiving unit and a sending unit, may be implemented by a transceiver or a transceiver-related circuit component, and may be a transceiver or a transceiver module. Operations and/or functions of the units in the second device 1100 are respectively intended to implement corresponding procedures of the data processing method in the foregoing method embodiments. All related content of the steps in the foregoing method embodiments may be referenced to function descriptions of corresponding functional units. For brevity, details are not described herein again.

Optionally, the second device 1100 shown in FIG. 11 may further include a storage unit (not shown in FIG. 11), and the storage unit stores a program or instructions. When the transceiver unit 1101 and the processing unit 1102 execute the program or the instructions, the second device 1100 shown in FIG. 11 can perform the data processing method in the foregoing method embodiments. For technical effects of the second device 1100 shown in FIG. 11, refer to the technical effects of the data processing method in the foregoing method embodiments. Details are not described herein again.

In addition to a form of the second device 1100, the technical solutions provided in this application may also be a functional unit or a chip in the second device, or an apparatus that is matched with the second device for use.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit ASIC), a system on chip (system on chip, SoC), a central processor unit (central processor unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data processing method in the foregoing embodiments.

An embodiment of this application further provides a computer program product. When the computer program product runs on a computer, the computer is enabled to perform the foregoing related steps to implement the data processing method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the data processing method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in the application-specific integrated circuit (application-specific integrated circuit, ASIC).

Based on the descriptions of the foregoing implementations, a person skilled in the art may clearly understand that, for ease and brevity of description, division of the foregoing functional modules is merely used as an example for description. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed method may be implemented in other manners. The described apparatus embodiments are merely examples. For example, division into the modules or units is merely logical function division and may be other division during an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

## Claims

1. A data processing method, applied to a first device, wherein the first device establishes one or more first connections to one or more second devices, the first device comprises a first secure environment, the one or more second devices comprise one or more second secure environments corresponding to the one or more second devices, and the method comprises:
determining that a security capability in the first secure environment of the first device is insufficient to process to-be-processed first data;
determining a target second secure environment that is in the one or more second secure environments and that comprises a first security capability, wherein the first security capability is used to process the to-be-processed first data in the first secure environment;
sending the first data to the target second secure environment through a second connection, wherein the second connection is a connection between the first secure environment and the target second secure environment; and
receiving a first processing result of the first data through the second connection, wherein the first processing result is a processing result generated after the first data is processed by using the first security capability.

2. The method according to claim 1, wherein the determining a target second secure environment that is in the one or more second secure environments and that comprises a first security capability comprises:
obtaining first security capability information, wherein the first security capability information comprises a security capability comprised in the one or more second secure environments; and
determining the target second secure environment based on the first security capability information.

3. The method according to claim 2, wherein before the sending the first data to the target second secure environment through a second connection, the method further comprises:
agreeing on a first key for data transmission between the first secure environment and the target second secure environment with a target second device comprising the target second secure environment, wherein the first key is used to encrypt the first data and the first processing result that are transmitted through the second connection.

4. The method according to claim 3, wherein the method further comprises:
deleting the first key.

5. The method according to claim 4, wherein the method further comprises:
determining that the target second secure environment comprises a second security capability, wherein the second security capability is used to process to-be-processed second data in the first secure environment; and
agreeing on a second key for data transmission between the first secure environment and the target second secure environment with the target second device, wherein the second key is used to encrypt the second data and a second processing result corresponding to the second data that are transmitted through the second connection.

6. The method according to any one of claims 2 to 5, wherein before the obtaining first security capability information, the method further comprises:
receiving, through the first connection, first information that is of the one or more second secure environments and that is sent by the one or more second devices;
determining, based on the first information, that the one or more second secure environments are secure; and
separately establishing one or more secure connections between the first secure environment and the one or more second secure environments, wherein the secure connection is used to obtain the first security capability information of the one or more second devices, and the second connection is a connection that corresponds to the target second secure environment and that is in the one or more secure connections.

7. The method according to claim 6, wherein the method further comprises:
sending, through the secure connection, second security capability information that is of a security capability comprised in the first secure environment and that is sent to the one or more second devices.

8. The method according to claim 7, wherein the method further comprises:
sending second security capability information of a security capability comprised in the first secure environment to a central node.

9. The method according to any one of claims 2 to 8, wherein the method further comprises:
disconnecting the first connection to the target second device comprising the target second secure environment; and deleting security capability information that is about the target second secure environment of the target second device and that is in the first security capability information.

10. A data processing apparatus, comprising a processor and a memory, wherein the memory is coupled to the processor, the memory is configured to store computer-readable instructions, and when the processor reads the computer-readable instructions from the memory, the data processing apparatus is enabled to perform the method according to any one of claims 1 to 9.

11. A computer-readable storage medium, wherein the computer-readable storage medium comprises a computer program, and when the computer program is run on a data processing apparatus, the data processing apparatus is enabled to perform the method according to any one of claims 1 to 9.

12. A computer program product, wherein when the computer program product runs on a computer, the computer is enabled to perform the method according to any one of claims 1 to 9.

## Patentansprüche

1. Datenverarbeitungsverfahren, angewendet auf ein erstes Gerät, wobei das erste Gerät eine oder mehrere erste Verbindungen zu einem oder mehreren zweiten Geräten herstellt, das erste Gerät eine erste sichere Umgebung umfasst, das eine oder die mehreren zweiten Geräte eine oder mehrere zweite sichere Umgebungen umfassen, die dem einen oder den mehreren zweiten Geräten entsprechen, und das Verfahren Folgendes umfasst:
Bestimmen, dass eine Sicherheitsfunktion in der ersten sicheren Umgebung des ersten Geräts nicht ausreichend ist, um zu verarbeitende erste Daten zu verarbeiten;
Bestimmen einer zweiten sicheren Zielumgebung, die sich in der einen oder den mehreren zweiten sicheren Umgebungen befindet und die eine erste Sicherheitsfunktion umfasst, wobei die erste Sicherheitsfunktion dazu verwendet wird, die zu verarbeitenden ersten Daten in der ersten sicheren Umgebung zu verarbeiten;
Senden der ersten Daten an die zweite sichere Zielumgebung über eine zweite Verbindung, wobei die zweite Verbindung eine Verbindung zwischen der ersten sicheren Umgebung und der zweiten sicheren Zielumgebung ist; und
Empfangen eines ersten Verarbeitungsergebnisses der ersten Daten über die zweite Verbindung, wobei das erste Verarbeitungsergebnis ein Verarbeitungsergebnis ist, das nach dem Verarbeiten der ersten Daten unter Verwendung der ersten Sicherheitsfunktion erzeugt wird.

2. Verfahren nach Anspruch 1, wobei das Bestimmen einer zweiten sicheren Zielumgebung, die sich in der einen oder den mehreren zweiten sicheren Umgebungen befindet und die eine erste Sicherheitsfunktion umfasst, Folgendes umfasst:
Erhalten erster Sicherheitsfunktionsinformationen, wobei die ersten Sicherheitsfunktionsinformationen eine Sicherheitsfunktion umfassen, die in der einen oder den mehreren zweiten sicheren Umgebungen umfasst ist; und
Bestimmen der zweiten sicheren Zielumgebung basierend auf den ersten Sicherheitsfunktionsinformationen.

3. Verfahren nach Anspruch 2, wobei das Verfahren vor dem Senden der ersten Daten an die zweite sichere Zielumgebung über eine zweite Verbindung ferner Folgendes umfasst:
Vereinbaren eines ersten Schlüssels zur Datenübertragung zwischen der ersten sicheren Umgebung und der zweiten sicheren Zielumgebung mit einem zweiten Zielgerät, das die zweite sichere Zielumgebung umfasst, wobei der erste Schlüssel dazu verwendet wird, die ersten Daten und das erste Verarbeitungsergebnis zu verschlüsseln, die über die zweite Verbindung übertragen werden.

4. Verfahren nach Anspruch 3, wobei das Verfahren ferner Folgendes umfasst:
Löschen des ersten Schlüssels.

5. Verfahren nach Anspruch 4, wobei das Verfahren ferner Folgendes umfasst:
Bestimmen, dass die zweite sichere Zielumgebung eine zweite Sicherheitsfunktion umfasst, wobei die zweite Sicherheitsfunktion dazu verwendet wird, zu verarbeitende zweite Daten in der ersten sicheren Umgebung zu verarbeiten; und
Vereinbaren eines zweiten Schlüssels zur Datenübertragung zwischen der ersten sicheren Umgebung und der zweiten sicheren Zielumgebung mit dem zweiten Zielgerät, wobei der zweite Schlüssel dazu verwendet wird, die zweiten Daten und ein zweites Verarbeitungsergebnis zu verschlüsseln, das den zweiten Daten entspricht, die über die zweite Verbindung übertragen werden.

6. Verfahren nach einem der Ansprüche 2 bis 5, wobei das Verfahren vor dem Erhalten der ersten Sicherheitsfunktionsinformationen ferner Folgendes umfasst:
Empfangen, über die erste Verbindung, von ersten Informationen, die aus der einen oder den mehreren zweiten sicheren Umgebungen stammen und die von dem einen oder den mehreren zweiten Geräten gesendet werden;
Bestimmen, basierend auf den ersten Informationen, dass die eine oder die mehreren zweiten sicheren Umgebungen sicher sind; und separates Herstellen einer oder mehrerer sicherer Verbindungen zwischen der ersten sicheren Umgebung und der einen oder den mehreren zweiten sicheren Umgebungen, wobei die sichere Verbindung dazu verwendet wird, die ersten Sicherheitsfunktionsinformationen des einen oder der mehreren zweiten Geräte zu erhalten, und die zweite Verbindung eine Verbindung ist, die der zweiten sicheren Zielumgebung entspricht und die in der einen oder den mehreren sicheren Verbindungen enthalten ist.

7. Verfahren nach Anspruch 6, wobei das Verfahren ferner Folgendes umfasst:
Senden, über die sichere Verbindung, von zweiten Sicherheitsfunktionsinformationen, die eine Sicherheitsfunktion betreffen, die in der ersten sicheren Umgebung umfasst ist, und die an die eine oder die mehreren zweiten Geräte gesendet werden.

8. Verfahren nach Anspruch 7, wobei das Verfahren ferner Folgendes umfasst:
Senden von zweiten Sicherheitsfunktionsinformationen einer Sicherheitsfunktion, die in der ersten sicheren Umgebung umfasst ist, an einen zentralen Knoten.

9. Verfahren nach einem der Ansprüche 2 bis 8, wobei das Verfahren ferner Folgendes umfasst:
Trennen der ersten Verbindung zu dem zweiten Zielgerät, das die zweite sichere Zielumgebung umfasst; und
Löschen von Sicherheitsfunktionsinformationen, die sich auf die zweite sichere Zielumgebung des zweiten Zielgeräts beziehen und in den ersten Sicherheitsfunktionsinformationen enthalten sind.

10. Datenverarbeitungsvorrichtung, umfassend einen Prozessor und einen Speicher, wobei der Speicher mit dem Prozessor gekoppelt ist, der Speicher dazu konfiguriert ist, computerlesbare Anweisungen zu speichern, und, wenn der Prozessor die computerlesbaren Anweisungen aus dem Speicher liest, die Datenverarbeitungsvorrichtung in die Lage versetzt wird, das Verfahren nach einem der Ansprüche 1 bis 9 durchzuführen.

11. Computerlesbares Speichermedium, wobei das computerlesbare Speichermedium ein Computerprogramm umfasst und, wenn das Computerprogramm auf einer Datenverarbeitungsvorrichtung läuft, die Datenverarbeitungsvorrichtung in die Lage versetzt wird, das Verfahren nach einem der Ansprüche 1 bis 9 durchzuführen.

12. Computerprogrammprodukt, wobei, wenn das Computerprogrammprodukt auf einem Computer läuft, der Computer in die Lage versetzt wird, das Verfahren nach einem der Ansprüche 1 bis 9 durchzuführen.

## Revendications

1. Procédé de traitement de données, appliqué à un premier dispositif, dans lequel le premier dispositif établit une ou plusieurs premières connexions à un ou plusieurs seconds dispositifs, le premier dispositif comprend un premier environnement sécurisé, les un ou plusieurs seconds dispositifs comprennent un ou plusieurs seconds environnements sécurisés correspondant aux un ou plusieurs seconds dispositifs, et le procédé comprend :
la détermination qu'une capacité de sécurité dans le premier environnement sécurisé du premier dispositif est insuffisante pour traiter des premières données à traiter ;
la détermination d'un second environnement sécurisé cible qui est parmi les un ou plusieurs seconds environnements sécurisés et qui comprend une première capacité de sécurité, dans lequel la première capacité de sécurité est utilisée pour traiter les premières données à traiter dans le premier environnement sécurisé ;
l'envoi des premières données vers le second environnement sécurisé cible à travers une seconde connexion, dans lequel la seconde connexion est une connexion entre le premier environnement sécurisé et le second environnement sécurisé cible ; et
la réception d'un premier résultat de traitement des premières données à travers la seconde connexion, dans lequel le premier résultat de traitement est un résultat de traitement généré après que les premières données ont été traitées à l'aide de la première capacité de sécurité.

2. Procédé selon la revendication 1, dans lequel la détermination d'un second environnement sécurisé cible qui est parmi les un ou plusieurs seconds environnements sécurisés et qui comprend une première capacité de sécurité comprend :
l'obtention de premières informations de capacité de sécurité, dans lequel les premières informations de capacité de sécurité comprennent une capacité de sécurité comprise parmi les un ou plusieurs seconds environnements sécurisés ; et
la détermination du second environnement sécurisé cible sur la base des premières informations de capacité de sécurité.

3. Procédé selon la revendication 2, dans lequel, avant l'envoi des premières données au second environnement sécurisé cible à travers une seconde connexion, le procédé comprend en outre :
le fait de convenir d'une première clé pour la transmission de données entre le premier environnement sécurisé et le second environnement sécurisé cible avec un second dispositif cible comprenant le second environnement sécurisé cible, dans lequel la première clé est utilisée pour chiffrer les premières données et le premier résultat de traitement qui sont transmis à travers la seconde connexion.

4. Procédé selon la revendication 3, dans lequel le procédé comprend en outre :
la suppression de la première clé.

5. Procédé selon la revendication 4, dans lequel le procédé comprend en outre :
la détermination que le second environnement sécurisé cible comprend une seconde capacité de sécurité, dans lequel la seconde capacité de sécurité est utilisée pour traiter des secondes données à traiter dans le premier environnement sécurisé ; et
le fait de convenir d'une seconde clé pour la transmission de données entre le premier environnement sécurisé et le second environnement sécurisé cible avec le second dispositif cible,
dans lequel la seconde clé est utilisée pour chiffrer les secondes données et un second résultat de traitement correspondant aux secondes données qui sont transmis à travers la seconde connexion.

6. Procédé selon l'une quelconque des revendications 2 à 5, dans lequel, avant l'obtention de premières informations de capacité de sécurité, le procédé comprend en outre :
la réception, à travers la première connexion, de premières informations relatives aux un ou plusieurs seconds environnements sécurisés et qui sont envoyées par les un ou plusieurs seconds dispositifs ;
la détermination, sur la base des premières informations, que les un ou plusieurs seconds environnements sécurisés sont sécurisés ; et
l'établissement séparé d'une ou de plusieurs connexions sécurisées entre le premier environnement sécurisé et les un ou plusieurs seconds environnements sécurisés, dans lequel la connexion sécurisée est utilisée pour obtenir les premières informations de capacité de sécurité des un ou plusieurs seconds dispositifs, et la seconde connexion est une connexion qui correspond au second environnement sécurisé cible et qui est parmi les une ou plusieurs connexions sécurisées.

7. Procédé selon la revendication 6, dans lequel le procédé comprend en outre :
l'envoi, à travers la connexion sécurisée, de secondes informations de capacité de sécurité relatives à une capacité de sécurité comprise dans le premier environnement sécurisé et qui sont envoyées aux un ou plusieurs seconds dispositifs.

8. Procédé selon la revendication 7, dans lequel le procédé comprend en outre :
l'envoi de secondes informations de capacité de sécurité d'une capacité de sécurité comprise dans le premier environnement sécurisé à un nœud central.

9. Procédé selon l'une quelconque des revendications 2 à 8, dans lequel le procédé comprend en outre :
la déconnexion de la première connexion au second dispositif cible comprenant le second environnement sécurisé cible ; et
la suppression d'informations de capacité de sécurité qui concernent le second environnement sécurisé cible du second dispositif cible et qui sont parmi les premières informations de capacité de sécurité.

10. Appareil de traitement de données, comprenant un processeur et une mémoire, dans lequel la mémoire est couplée au processeur, la mémoire est configurée pour stocker des instructions lisibles par ordinateur, et lorsque le processeur lit les instructions lisibles par ordinateur à partir de la mémoire, l'appareil de traitement de données est activé pour réaliser le procédé selon l'une quelconque des revendications 1 à 9.

11. Support de stockage lisible par ordinateur, dans lequel le support de stockage lisible par ordinateur comprend un programme informatique, et lorsque le programme informatique est exécuté sur un appareil de traitement de données, l'appareil de traitement de données est activé pour réaliser le procédé selon l'une quelconque des revendications 1 à 9.

12. Produit de programme informatique, dans lequel lorsque le produit de programme informatique est exécuté sur un ordinateur, l'ordinateur est activé pour réaliser le procédé selon l'une quelconque des revendications 1 à 9.
